# EUROPEAN PATENT SPECIFICATION

(11) **EP 3 192 344 B1**
(45) Date of publication and mention of the grant of the patent: **30.09.2020**
(21) Application number: 17151060.5
(22) Date of filing: 11.01.2017
(51) Int. Cl.: A01B 79/00

(54) **INTELLIGENT TRACTOR / IMPLEMENT CONFIGURATION**
INTELLIGENTE TRAKTOR / ARBEITSGERÄT-KONFIGURATION
CONFIGURATION DE TRACTEUR / OUTIL INTELLIGENT

(30) Priority: 12.01.2016 IT UB20169914
(43) Date of publication of application: 19.07.2017
(73) Proprietor: CNH Industrial Italia S.p.A., 10135 Torino (IT)
(72) Inventor: FERRARI, Luca, 41043 Formigine (Modena) (IT); PAOLILLO, Giorgio, 42048 Rubiera (IT)
(74) Representative: CNH Industrial IP Department

(56) References cited:
- EP-A1- 2 132 971
- EP-A1- 2 957 158
- DE-A1- 10 217 398

## Description

### BACKGROUND OF THE INVENTION

The present invention relates to a method for identifying, connecting, configuring, verifying, and operating agricultural tractor and implement combinations.

Agricultural tractors are used to pull various agricultural implements that are necessary for tilling, seedbed preparation, planting, mowing, raking, harvesting, baling, spraying, and fertilizing. Often, these various agricultural implements have sophisticated control systems involving highly automated functions requiring extensive integration of the agricultural tractor and implement controls and support systems. Further, the agricultural tractor and implement combination may be required to jointly perform tasks that involve integration of commands, user preferences, and network connectivity. However, the current level of integration made possible through such communication protocols as ISO 11783 ("ISOBUS"), SAE J1939, and CANbus do not enforce full integration of commands, nor do they provide links to user preferences. This leads to a "plug and play" approach in regards to user preferences.

Additionally, future applications will require timing requirements that might not be compatible with a best effort approach, and will require the use of static definitions. Moreover, the task of making mechanical, electrical, electronic, or hydraulic connections between the agricultural tractor and implement is often seen as unrelated to the overall integration of these two pieces of equipment. This results in agricultural tractor and implement combinations that are difficult to connect, poorly configured, and improperly or inefficiently operated. Further, the current state of affairs does not optimize functional or operational safety. A prior art method for configuring a tractor and implement combination is known from the document EP-A1-2 132 971.

What is needed in the art is an intelligent way of connecting, configuring, and operating agricultural tractor and implement combinations. The method used needs to be straightforward and intuitive to an operator, requiring a minimum of searching for equipment information in order to resolve compatibility and configuration issues. The method or system needs to appear to the user as self-configuring as much as possible, resulting in the desired level of system integration between the agricultural tractor and the implement. The method or system further needs to take into account user preferences and the mission profile.

### SUMMARY OF THE INVENTION

The present invention provides such a way to intelligently connect, configure, and operate agricultural tractor and implement combinations. The method may take advantage of readily available consumer handheld wireless electronic devices such as smartphones or smartwatches. The method uses a handheld wireless electronic device and wireless communications and/or embedded passive communication devices to automatically identify and obtain information from the agricultural tractor and/or agricultural implement. The handheld wireless electronic device may be in communication with a database server, which may access compatibility and/or configuration data concerning the agricultural tractor and implement combination.

The present invention provides guidance and/or safety information to an operator in connecting the agricultural implement to the agricultural tractor, using the handheld wireless electronic device and/or the tractor display, and audio and/or video interaction, including the presentation of safety measures. On the basis of this provided guidance and/or safety information, the operator then actually makes the physical connections. A profile of the tractor and implement combination may be created, and updated details concerning the connection may be provided back to the database server.

The present invention automatically configures the tractor and implement combination, possibly including user preferences, a mission profile, updated software drivers and configuration information pertaining to the control and operation of the agricultural implement.

The present invention may provide a checklist to the operator using the handheld wireless electronic device, along with training information, instructions, and/or manuals, as appropriate. The checklist may require the operator to verify that the guidance and/or safety information in connecting the agricultural implement to the agricultural tractor was followed, that the received configuration is consistent with the actual setup, and that all connections are working properly, including instructions on how to determine that the connections are in fact working properly.

The present invention may further provide step by step operating instructions and/or guidance to the operator through written, visual, or audio instructions. Particular instructions may be provided pertaining to enforcing operational safety. Operator authorization information may be required of the operator and may be entered using the handheld wireless electronic device. Further logging information may be recorded, and operational data may be provided back to the database server.

The invention in one form is directed to a method for configuring an agricultural tractor and implement combination, including several steps. In the first step, preferably a handheld wireless electronic device is used to obtain identifying information and/or relevant information from the agricultural tractor and from the implement. In the second step guidance and/or safety information is provided to an operator concerning making physical connections between the agricultural implement and the agricultural tractor. In the third step, the combination of the agricultural tractor and the agricultural implement is automatically configured. The step of automatically configuring the combination of the agricultural tractor and the agricultural implement may include downloading to the agricultural tractor and/or to the implement up to date software drivers and/or configuration information from a database server, downloading to the agricultural tractor and/or to the implement user preferences from the database server and/or from the preferably handheld wireless electronic device, and/or downloading to the agricultural tractor and/or to the implement a mission profile from the database server and/or from the preferably handheld wireless electronic device.

An advantage of the present invention is that it does not rely on an operator to enter all relevant identifying information or relevant information regarding the agricultural tractor and/or agricultural implement.

Another advantage is that it guides an operator through the process of connecting, configuring, and operating a particular agricultural tractor and implement combination.

Another advantage is that the present invention improves functional and operational safety.

Another advantage is that the present invention automatically configures the tractor and implement combination with the most recent configuration information and software drivers, so that functional safety, operational safety, and efficiency are optimized.

Another advantage of the present invention is that it improves management of service to be performed on the agricultural tractor and implement.

Another advantage is that it reduces the amount of time involved in connecting, configuring, and operating the agricultural tractor and implement combination.

Finally, the present invention enables entirely new business models, including leasing of implements and providing for the resource pooling of tractors and implements.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is an isometric view of an agricultural tractor and implement accompanied by a graphical representation of a method for identifying, connecting, configuring, verifying, and operating agricultural tractor and implement combinations according to an embodiment of the present invention;
Fig. 2 is another isometric view of an agricultural tractor and implement accompanied by a graphical representation of a method for identifying, connecting, configuring, verifying, and operating agricultural tractor and implement combinations according to another embodiment of the present invention; and
Fig. 3 is a flow chart showing the series of steps taken in the functioning of an embodiment of the invention.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

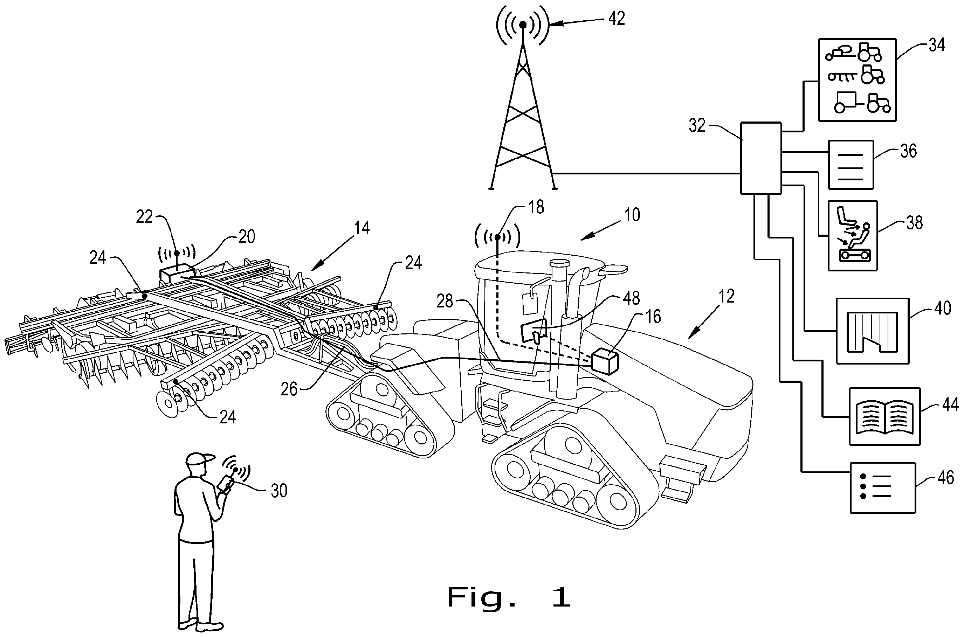

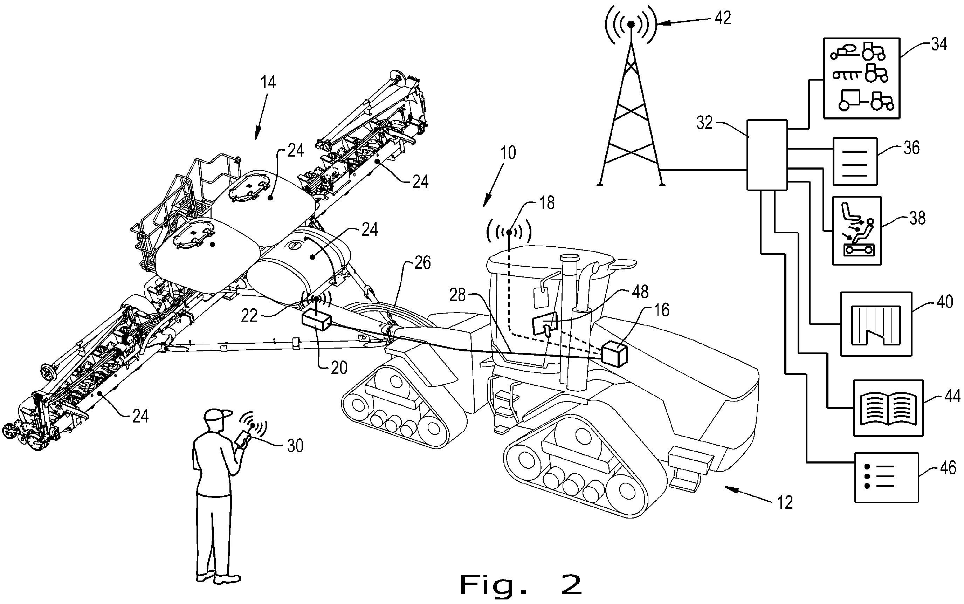

Referring now to the drawings, and more particularly to Figs. 1 and 2, there is shown embodiments of the present invention, an intelligently configured tractor and implement combination 10. The agricultural tractor 12 is attached to an agricultural implement 14, in order to perform an agricultural function, such as tilling, seedbed preparation, planting, mowing, raking, harvesting, baling, spraying, or fertilizing, as non-limiting examples. In the case of the agricultural implement 14 shown in Fig. 1, the agricultural function is tilling and/or seedbed preparation. In the case of the agricultural implement 14 shown in Fig. 2, the agricultural function is planting.

The agricultural tractor 12 has at least one tractor control unit 16, which is connected to a tractor wireless connection 18. This tractor wireless connection 18 may be any type of wireless connection capable of transmitting and receiving data, such as cellular, Personal Area Network (PAN), Wireless Sensor Network (WSN), Wireless Local Area Network (WLAN), or Wireless Wide Area Network (WWAN), as non-limiting examples. The agricultural implement 14 may also have at least one implement control unit 20, which may also be connected to an implement wireless connection 22. The implement wireless connection 22 may again be any type of wireless connection capable of transmitting and receiving data, as noted above. The agricultural implement 14 may also be provided with embedded passive communication devices 24, which may be any type of passive communication device operable to transmit data in response to a query, such as Near Field Communication (NFC) or Radio Frequency Identification (RFID), or to provide visually encoded information, such as machine readable Quick Response (QR) codes or barcodes. The agricultural implement 14 is physically attached to the agricultural tractor 12, and is provided with physical connections 26, which may include mechanical, electrical, electronic, and/or hydraulic connections, possibly including a Controller Area Network (CAN) bus and/or other bus communication, such as Ethernet 28.

Figs. 1 and 2 further show an operator having a handheld wireless electronic device 30, which may be a dedicated handheld wireless electronic device capable of transmitting and receiving data for the purposes of the present invention, or may be a multi-purpose handheld wireless electronic device capable of transmitting and receiving data, such as a smart-phone or a smart-watch. The handheld wireless electronic device 30 is capable of communicating with the tractor wireless connection 18 of the agricultural tractor 12, and with the implement wireless connection 22 of the agricultural implement 14, again by way of any type of wireless connection capable of transmitting and receiving data, as noted above. The handheld wireless electronic device 30 may further be capable of communicating with the embedded passive communication devices 24.

The preferably handheld wireless electronic device 30 also communicates with a database server 32 by way of a database server wireless connection 42, to which the database server 32 is connected. The database server wireless connection 42 may again be any of a number of types of wireless connection capable of transmitting and receiving data. The database server 32 may contain one or more sets of information, including:
- compatibility and/or configuration data concerning the agricultural tractor and implement combination, and/or pairing certificates pertaining thereto, represented in block 34;
- driver software, driver information, and/or tractor or implement control unit configuration information, represented in block 36;
- user preferences, represented in block 38;
- a mission profile, represented in block 40;
- training information, instructions, manuals, and/or checklists, represented in block 44; and/or
- operational information, operator authorization information, and/or operator logging information, represented in block 46.

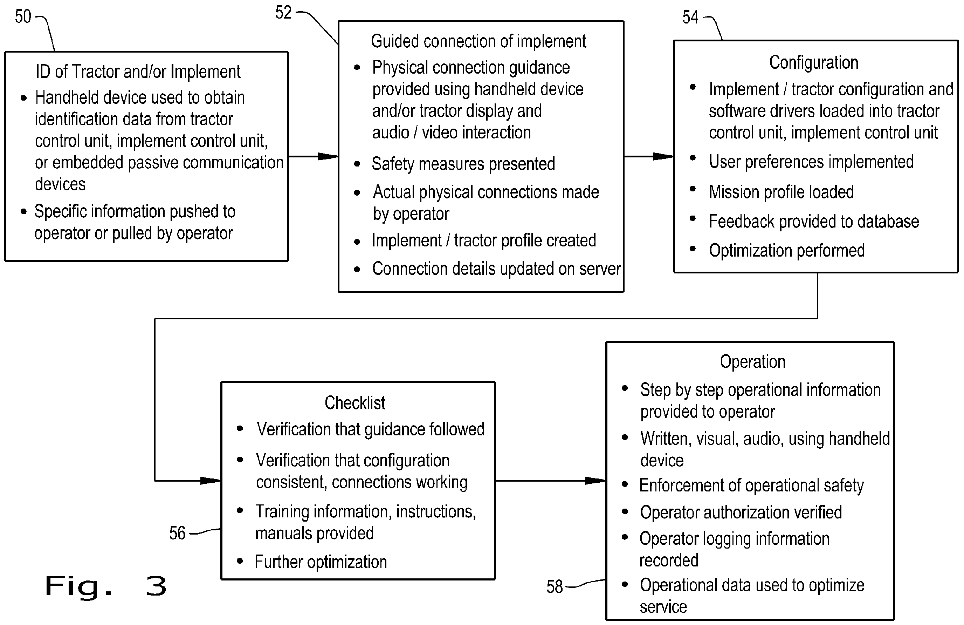

Referring now to Fig. 3, the system or method of the present invention includes a series of steps of identifying, connecting, configuring, checking, and operating the agricultural tractor 12 and agricultural implement 14 combination 10. In the first step 50, the handheld wireless electronic device 30 is used to obtain identifying information and/or relevant information from the agricultural tractor 12 and agricultural implement 14. This information may include make, model, serial number, physical geometric characteristics, capacities, limitations, current condition, current settings, requirements, connections, and/or communication protocols, as non-limiting examples. The information may be obtained from the at least one tractor control unit 16 by way of the tractor wireless connection 18, from the at least one implement control unit 20 by way of the implement wireless connection 22, and/or from the embedded passive communication devices 24.

Specific or further detailed information regarding the agricultural tractor 12 or the agricultural implement 14 may be specifically pushed to the operator by a farm or fleet manager through the database server wireless connection 42 or by other wireless connections through the handheld wireless electronic device 30. Specific or further detailed information regarding the agricultural tractor 12 or the agricultural implement 14 may also be specifically pulled by the operator through the database server wireless connection 42 or by other wireless connections through the handheld wireless electronic device 30 and/or by the tractor control unit 16. The handheld wireless electronic device 30 may at this step also contact the database server 32, which may access the compatibility and/or configuration data 34 concerning the agricultural tractor and implement combination, and/or pairing certificates pertaining thereto, in order to determine any compatibility issues between the agricultural tractor 12 and the agricultural implement 14. Pairing certificates based on the correct combination 10 of agricultural tractor 12 and agricultural implement 14 may be used to enforce functional safety.

In the second step 52, the operator is provided with guidance and/or safety information in connecting the agricultural implement 14 to the agricultural tractor 12, including physical connections 26, which may include mechanical, electrical, electronic, and/or hydraulic connections, possibly including the CAN bus and/or other bus communication, such as Ethernet 28. This is accomplished through audio and/or video interaction by way of the handheld wireless electronic device 30 and/or through the tractor display 48, wherein operational instructions on how to perform operations in a safe manner or safety instructions including use of PPE (Personal Protective Equipment) may be presented. The handheld wireless electronic device 30 may indicate, for example, which remote hydraulic or electrical connections are free and available for use by the agricultural implement 14. On the basis of this provided guidance and/or safety information, the operator then actually makes the physical connections 26. During this step, the handheld wireless electronic device 30 and/or the database server 32 to which the handheld wireless electronic device 30 is wirelessly connected may create a profile of the tractor and implement combination 10, and may update details concerning the connection between the agricultural tractor 12 and the agricultural implement 14 on the database server 32.

In the third step 54, the combination 10 of the agricultural tractor 12 and the agricultural implement 14 is automatically configured, user preferences 38 are implemented, and a mission profile 40 is downloaded. Specifically, the handheld wireless electronic device 30, the database server 32 communicating through the wireless connection 42, the tractor control unit 16 communicating through the tractor wireless connection 18, and/or the implement control unit 20 communicating through the implement wireless connection 22, cooperate to verify that the software drivers and configuration information 36 pertaining to the control and operation of the agricultural implement 14 are the latest software drivers and configuration information available for that combination 10. If the software drivers and configuration information contained within the tractor control unit 16 and/or the implement control unit 20 are not the latest available, the database server 32 provides the latest available software drivers and configuration information 36 and configures the tractor control unit 16 and/or the implement control unit 20, as applicable. Moreover, feedback may be provided to the database server 32 and to the handheld wireless electronic device 30 updating them with information regarding the ongoing configuration in a dynamic manner. This allows for a dynamic configuration process to be performed in parallel to the physical setup. Further, this data may be used to optimize servicing of the agricultural tractor 12 and/or the agricultural implement 14.

As stated, user preferences 38 are also implemented in the third step 54. Specifically, the handheld wireless electronic device 30, the database server 32 communicating through the wireless connection 42, the tractor control unit 16 communicating through the tractor wireless connection 18, and/or the implement control unit 20 communicating through the implement wireless connection 22, cooperate to adjust certain settings of the agricultural tractor 12 and/or settings of the agricultural implement 14 to match those contained within the database server 32 and/or within the handheld wireless electronic device 30. These settings may include, for example, adjustments to the agricultural functions being performed by the agricultural implement 14, (e.g. indication of ballast to be used depending on tire type, soil type, or environmental conditions). A mission profile 40 is also downloaded to the tractor control unit 16 communicating through the tractor wireless connection 18 and/or the implement control unit 20 communicating through the implement wireless connection 22 from the database server 32. This mission profile 40 may include an area to be covered, field or soil conditions, time allotted, or required tractor speed, as non-limiting examples.

In a possible fourth step 56, a checklist 44 is presented to the operator by way of the handheld wireless electronic device 30, along with training information, instructions, and/or manuals, as appropriate. The checklist 44 may require the operator to verify that the provided guidance and/or safety information in connecting the agricultural implement 14 to the agricultural tractor 12 was followed, and that the received configuration is consistent with the actual setup and that all connections are working properly, including instructions on how to determine that the connections are in fact working properly. User preference settings 38 may be verified by the operator using the handheld wireless electronic device 30 during this step, along with acknowledging or confirming the mission profile 40. The database server 32 and/or the handheld wireless electronic device 30 may also suggest optimizing changes during this step, such as, for example, increasing or decreasing ballast due to the use of a certain implement in a certain application under certain field conditions.

In a possible fifth step 58, operational information 46 is provided to the operator using the database server 32 in communication with the handheld wireless electronic device 30 by way of the wireless connection 42. This operational information 46 may include step by step operating instructions and/or guidance provided to the operator through written, visual, or audio instructions. Particular instructions may be provided pertaining to enforcing operational safety. Again, training information, instructions, and/or manuals may be provided as appropriate using the handheld wireless electronic device 30. Further, in the fifth step 58, operator authorization information may be required of the operator. The operator authorization information may be entered using the handheld wireless electronic device 30, and compared to authorization information contained on the database server 32. Operator logging information may be gathered using the handheld wireless electronic device 30 and recorded in the database server 32. This operator logging information may be used for operator profile generation, and evaluations necessary to support functional safety. Additionally, operational data may be provided back to the database server 32 during this step, thereby optimizing the service of the agricultural tractor 12 and of the agricultural implement 14, independent of the level of automation of the agricultural implement 14.

## Claims

1. A method for configuring an agricultural tractor (12) and implement (14) combination (10), comprising:
a first step (50) of using a, preferably handheld, wireless electronic device (30) to obtain identifying information and/or relevant information from the agricultural tractor (12) and from the implement (14);
a second step (52) of providing guidance and/or safety information to an operator concerning making physical connections (26) between the agricultural implement (14) and the agricultural tractor (12);
a third step (54) of automatically configuring the combination (10) of the agricultural tractor (12) and the agricultural implement (14), including at least one of:
downloading to the agricultural tractor (12) and/or to the implement (14) up to date configuration information (36) from a database server (32);
downloading to the agricultural tractor (12) and/or to the implement (14) user preferences (38) from the database server (32) and/or from the preferably handheld wireless electronic device (30); and
downloading to the agricultural tractor (12) and/or to the implement (14) a mission profile (40) from the database server (32) and/or from the preferably handheld wireless electronic device (30).

2. The method of claim 1, wherein:
during the first step (50), the identifying information and/or relevant information, and during the second step (52), the guidance and/or safety information, is provided to the operator through the handheld wireless electronic device (30) and/or through a tractor display (48).

3. The method of claims 1 - 2, wherein:
during the second step (52), the operator then makes the physical connections (26) on the basis of the guidance and/or safety information provided through the handheld wireless electronic device (30) and/or through the tractor display (48).

4. The method of claims 1 - 3, wherein:
the identifying information and/or relevant information obtained in the first step (50) includes at least one of a make, model, serial number, physical geometric characteristic, capacity, limitation, current condition, current setting, requirement, connection, and communication protocol.

5. The method of claims 1 - 4, wherein:
the identifying information and/or relevant information obtained in the first step (50) is communicated to the handheld wireless electronic device (30) from at least one tractor control unit (16) by way of a tractor wireless connection (18), from at least one implement control unit (20) by way of an implement wireless connection (22), and/or from at least one embedded passive communication device (24).

6. The method of claims 1 - 5, wherein:
during the first step (50), the handheld wireless electronic device (30) contacts the database server (32) and accesses compatibility and/or configuration data (34) concerning the agricultural tractor (12) and implement (14) combination (10), in order to determine any compatibility issues between the agricultural tractor (12) and the agricultural implement (14).

7. The method of claims 1 - 6, wherein:
the physical connections (26) of the second step (52) include at least one of a mechanical connection, an electrical connection, an electronic connection, a CAN bus connection, an Ethernet connection, and a hydraulic connection.

8. The method of claims 1 - 7, wherein:
the second step (52) of providing guidance and/or safety information to an operator through the handheld wireless electronic device (30) concerning making physical connections (26) between the agricultural implement (14) to the agricultural tractor (12) is accomplished using audio and/or video interaction using the handheld wireless electronic device (30).

9. The method of claims 1 - 8, wherein:
during the second step (52), the handheld wireless electronic device (30) and/or the database server (32) to which the handheld wireless electronic device (30) is wirelessly connected creates a profile of the agricultural tractor (12) and implement (14) combination (10), and updates details concerning the connection between the agricultural tractor (12) and the agricultural implement (14) on the database server (32).

10. The method of claim 1, wherein:
during the third step (54), the handheld wireless electronic device (30), the database server (32) communicating through a wireless connection (42), at least one tractor control unit (16) communicating through a tractor wireless connection (18), and/or an implement control unit (20) communicating through an implement wireless connection (22), cooperate to verify that software drivers and configuration information (36) pertaining to control and operation of the agricultural implement (14) are the latest software drivers and/or configuration information (36) available for that agricultural tractor (12) and implement (14) combination (10) and to update the software drivers and/or configuration information (36) and configure the tractor control unit (16) and/or the implement control unit (20) as needed.

11. The method of claim 10, wherein:
during the third step (54), feedback is provided to the database server (32) and to the handheld wireless electronic device (30) updating them with information regarding the ongoing configuration in a dynamic manner.

12. The method of claims 1 - 11, further comprising:
a fourth step (56) of providing a checklist (44) to the operator through the handheld wireless electronic device (30), the checklist (44) requiring the operator to verify that the guidance and/or safety information provided in the second step (52) concerning making physical connections (26) between the agricultural implement (14) and the agricultural tractor (12) was followed.

13. The method of claim 12, wherein:
the checklist (44) of the fourth step (56) further requiring the operator to confirm that the automatic configuration performed during the third step (54) is consistent with the actual agricultural tractor (12) and implement (14) combination (10), and that all physical connections (26) are working properly, the checklist (44) further including instructions on how to determine that the physical connections (26) are in fact working properly

14. The method of claims 1 - 13, further comprising:
a fifth step (58) of providing operational information (46) to the operator using the handheld wireless electronic device (30) in communication with the database server (32) by way of the wireless connection (42), the operational information (46) including step by step operating instructions provided to the operator through written, visual, or audio instructions.

15. The method of claim 14, wherein:
during the fifth step 58, gathering operator logging information using the handheld wireless electronic device (30) and recording the operator logging information in the database server (32) and/or providing operational data back to the database server (32).

## Patentansprüche

1. Verfahren zum Einrichten einer Kombination (10) aus einem landwirtschaftlichen Traktor (12) und einem Arbeitsgerät (14) mit folgenden Schritten:
einem ersten Schritt (50) der Verwendung einer vorzugsweise tragbaren, drahtlosen elektronischen Vorrichtung (30), um Kennzeichnungsdaten und/oder relevante Daten von dem landwirtschaftlichen Traktor (12) und von dem Arbeitsgerät (14) zu ermitteln;
einem zweiten Schritt (52) der Bereitstellung von Anleitungs- und/oder Sicherheitsdaten an eine Bedienperson, die das Herstellen von physischen Verbindungen (26) zwischen dem landwirtschaftlichen Arbeitsgerät (14) und dem landwirtschaftlichen Traktor (12) betreffen;
einem dritten Schritt (54) zum automatischen Einrichten der Kombination (10) des landwirtschaftlichen Traktors (12) und des landwirtschaftlichen Arbeitsgeräts (14), der mindestens einen der folgenden Schritte umfasst:
Herunterladen von aktuellen Konfigurationsdaten (36) von einem Datenbankserver (32) an den landwirtschaftlichen Traktor (12) und/oder das Arbeitsgerät (14);
Herunterladen von Benutzereinstellungen (38) von dem Datenbankserver (32) und/oder von der vorzugsweise tragbaren, drahtlosen elektronischen Vorrichtung (30) auf den landwirtschaftlichen Traktor (12) und/oder auf das Arbeitsgerät (14); und
Herunterladen eines Einsatzprofils (40) von dem Datenbankserver (32) und/oder von der vorzugsweise tragbaren, drahtlosen elektronischen Vorrichtung (30) auf den landwirtschaftlichen Traktor (12) und/oder auf das Arbeitsgerät (14).

2. Verfahren nach Anspruch 1, wobei:
während des ersten Schritts (50) die Kennzeichnungsdaten und/oder relevanten Daten und während des zweiten Schritts (52) die Anleitungs- und/oder Sicherheitsdaten an die Bedienperson durch die tragbare drahtlose elektronische Vorrichtung (30) und/oder durch eine Traktoranzeige (48) bereitgestellt werden.

3. Verfahren nach den Ansprüchen 1-2, wobei:
während des zweiten Schritts (52) die Bedienperson anschließend die physischen Verbindungen (26) auf Basis der Anleitung- und/oder Sicherheitsdaten durchführt, die durch die tragbare drahtlose elektronische Vorrichtung (30) und/oder durch die Traktoranzeige (48) bereitgestellt wurden.

4. Verfahren nach den Ansprüchen 1-3, wobei:
die Kennzeichnungsdaten und/oder relevanten Daten, die in dem ersten Schritt (50) ermittelt wurden, mindestens Daten aus der folgenden Aufzählung aufweisen: Hersteller, Modell, Seriennummer, physische geometrische Eigenschaften, Kapazität, Einschränkungen, derzeitiger Zustand, derzeitige Einstellung, Anforderung, Verbindung und Kommunikationsprotokoll.

5. Verfahren nach den Ansprüchen 1-4, wobei:
die Kennzeichnungsdaten und/oder relevanten Daten, die in dem ersten Schritt (50) ermittelt wurden, an die tragbare drahtlose elektronische Vorrichtung (30) von mindestens einer Traktorsteuereinheit (16) mittels einer drahtlosen Traktorverbindung (18), von mindestens einer Arbeitsgerätsteuereinheit (20) mittels einer drahtlosen Arbeitsgerätverbindung (22) und/oder von mindestens einer eingebauten passiven Kommunikationsvorrichtung (24) kommuniziert werden.

6. Verfahren nach den Ansprüchen 1-5, wobei:
während des ersten Schrittes (50) die tragbare drahtlose elektronische Vorrichtung (30) den Datenbankserver (32) kontaktiert und auf Kompatibilitäts-und/oder Konfigurationsdaten (34) zugreift, die die Kombination (10) aus landwirtschaftlichem Traktor (12) und Arbeitsgerät (14) betreffen, um Kompatibilitätsaspekte zwischen dem landwirtschaftlichen Traktor (12) und dem landwirtschaftlichen Arbeitsgerät (14) zu bestimmen.

7. Verfahren nach den Ansprüchen 1-6, wobei:
die physischen Verbindungen (26) des zweiten Schrittes (52) mindestens einen aus der folgenden Liste umfassen: eine mechanische Verbindung, eine elektrische Verbindung, eine elektronische Verbindung, eine CAN-Bus Verbindung, eine Ethernet Verbindung und eine hydraulische Verbindung.

8. Verfahren nach den Ansprüchen 1-7, wobei:
der zweite Schritt (52) des Bereitstellens von Anleitungs- und/oder Sicherheitsdaten an eine Bedienperson durch die tragbare drahtlose elektronische Vorrichtung (30), die das Herstellen von physischen Verbindungen (26) zwischen dem landwirtschaftlichen Arbeitsgerät (14) und dem landwirtschaftlichen Traktor (12) betreffen, unter der Verwendung von Audio- und/oder Videointeraktion unter Verwendung der tragbaren drahtlosen elektronischen Vorrichtung (30) erreicht wird.

9. Verfahren nach den Ansprüchen 1-8, wobei:
während des zweiten Schrittes (52) die tragbare drahtlose elektronische Vorrichtung (30) und/oder der Datenbankserver (32), mit dem die tragbare drahtlose elektronische Vorrichtung (30) drahtlos verbunden ist, ein Profil der Kombination (10) des landwirtschaftlichen Traktors (12) und dem Arbeitsgerät (14) erzeugt und Einzelheiten betreffend die Verbindung zwischen dem landwirtschaftlichen Traktor (12) und dem landwirtschaftlichen Arbeitsgerät (14) auf dem Datenbankserver (32) aktualisiert.

10. Verfahren nach Anspruch 1, wobei:
während des dritten Schritts (54) die tragbare drahtlose elektronische Vorrichtung (30), der Datenbankserver (32), der über eine drahtlose Verbindung (42) kommuniziert, mindestens eine Traktorsteuereinheit (16), die über eine drahtlose Traktorverbindung (18) kommuniziert, und/oder eine Arbeitsgerätsteuereinheit (20), die über eine drahtlose Arbeitsgerätsverbindung (22) kommuniziert, zusammenwirken, um zu verifizieren, dass die Softwaretreiber und Konfigurationsdaten (36), die die Steuerung und den Betrieb des landwirtschaftlichen Arbeitsgeräts (14) betreffen, die neuesten Softwaretreiber und/oder Konfigurationsdaten (36) sind, die für die Kombination (10) aus wirtschaftlichem Traktor (12) und Arbeitsgerät (14) verfügbar sind, und um die Softwaretreiber und/oder die Konfigurationsdaten (36) zu aktualisieren und die Traktorsteuereinheit (16) und/oder die Arbeitsgerätsteuereinheit (20) bei Bedarf zu konfigurieren.

11. Verfahren nach Anspruch 10, wobei:
während des dritten Schritts (54) eine Rückmeldung an den Datenbankserver (32) und an die tragbare drahtlose elektronische Vorrichtung (30) erfolgt, die sie mit Daten bezüglich der laufenden Konfiguration in einer dynamischen Art und Weise aktualisiert.

12. Verfahren nach den Ansprüchen 1-11, das des Weiteren aufweist:
einen vierten Schritt (56) der Bereitstellung einer Checkliste (44) für die Bedienperson über die tragbare drahtlose elektronische Vorrichtung (30), wobei die Checkliste (44) die Bedienperson aufgefordert, zu verifizieren, dass den Anleitungs- und Sicherheitsdaten gefolgt wurde, die in dem zweiten Schritt (52) hinsichtlich des Herstellens der physischen Verbindungen (26) zwischen der landwirtschaftlichen Arbeitsgerät (14) und dem landwirtschaftlichen Traktor (12) bereitgestellt wurden.

13. Verfahren nach Anspruch 12, wobei:
die Checkliste (44) des vierten Schritts (56) des Weiteren die Bedienperson auffordert, zu bestätigen, dass die während des dritten Schrittes (54) durchgeführte automatische Konfiguration konsistent mit der aktuellen Kombination (10) aus landwirtschaftlichen Traktor (12) und Arbeitsgerät (14) ist, und dass alle physischen Verbindungen (26) ordentlich funktionieren, wobei die Checkliste (44) des Weiteren Anweisungen umfasst, wie zu bestimmen ist, dass die physischen Verbindungen (26) tatsächlich ordentlich funktionieren.

14. Verfahren nach den Ansprüchen 1-13, das des Weiteren aufweist:
einen fünften Schritt (58) des Bereitstellens von Betriebsdaten (46) an die Bedienperson unter Verwendung der tragbaren drahtlosen elektronischen Vorrichtung (30) in Verbindung mit dem Datenbankserver (32) mittels der drahtlosen Verbindung (42), wobei die Betriebsdaten (46) Schritt-für-Schritt Betriebsanweisungen umfassen, die der Bedienperson durch geschriebene, visuelle oder Audioanweisungen bereitgestellt werden.

15. Verfahren nach Anspruch 14, wobei:
während des fünften Schritts (58) Bedienpersonsaufzeichnungsdaten unter Verwendung der tragbaren drahtlosen elektronischen Vorrichtung (30) gesammelt und die Bedienpersonsaufzeichnungsdaten in dem Datenbankserver (32) aufgezeichnet und/oder die Betriebsdaten zurück an den Datenbankserver (32) gespielt werden.

## Revendications

1. Méthode de configuration d'une combinaison (10) d'un tracteur agricole (12) et d'un outil agricole (14), comprenant :
une première étape (50) d'utilisation d'un dispositif électronique sans fil, préférablement portatif (30), afin d'obtenir des données d'identification et/ou pertinentes du tracteur agricole (12) et de l'outil (14) ;
une deuxième étape (52) de fourniture de guidage et/ou d'informations de sécurité à un opérateur, concernant l'établissement de liens physiques (26) entre l'outil agricole (14) et le tracteur agricole (12) ;
une troisième étape (54) de configuration automatique de la combinaison (10) du tracteur agricole (12) et de l'outil agricole (14), comprenant au moins un parmi :
un téléchargement au tracteur agricole (12) et/ou à l'outil (14) d'informations de configuration à jour (36) d'un serveur de base de données (32) ;
un téléchargement au tracteur agricole (12) et/ou à l'outil (14) de préférences de l'utilisateur (38) du serveur de base de données (32) et/ou du dispositif électronique sans fil, préférablement portatif (30) ; et
un téléchargement au tracteur agricole (12) et/ou à l'outil (14) d'un profil de mission (40) du serveur de base de données (32) et/ou du dispositif électronique sans fil, préférablement portatif (30).

2. Méthode selon la revendication 1, dans laquelle :
lors de la première étape (50), les données d'identification et/ou pertinentes, et lors de la deuxième étape (52), le guidage et/ou les informations de sécurité, sont fournis à l'opérateur par le dispositif électronique sans fil (30) et/ou par l'affichage à l'écran du tracteur (48).

3. Méthode selon les revendications 1 à 2, dans laquelle :
lors de la deuxième étape (52), l'opérateur établit des liens physiques (26) sur la base du guidage et/ou des informations de sécurités fourni(es) par le dispositif électronique sans fil portatif (30) et/ou par affichage à l'écran du tracteur (48).

4. Méthode selon les revendications 1 à 3, dans laquelle :
les données d'identification et/ou pertinentes obtenues lors de la première étape (50) comprennent au moins un(e) parmi une marque, un modèle, un numéro de série, une caractéristique géométrique physique, une capacité, une limitation, une condition actuelle, un réglage actuel, une exigence, une connexion et un protocole de communication.

5. Méthode selon les revendications 1 à 4, dans laquelle :
les données d'identification et/ou pertinentes obtenues lors de la première étape (50) sont transmises au dispositif électronique sans fil portatif (30) à partir d'au moins une unité de commande du tracteur (16)au moyen d'une connexion sans fil dans le tracteur (18), à partir d'au moins une unité de commande de l'outil (20) au moyen d'une connexion sans fil de l'outil (22) et/ou à partir d'au moins un dispositif de communication passif intégré (24).

6. Méthode selon les revendications 1 à 5, dans laquelle :
lors de la première étape (50), le dispositif électronique sans fil portatif (30) contacte le serveur de base de données (32) et accède aux données de compatibilité et/ou de configuration (34) concernant la combinaison (10) du tracteur agricole (12) et de l'outil (14), afin de déterminer tout problème de compatibilité entre le tracteur agricole (12) et l'outil agricole (14).

7. Méthode selon les revendications 1 à 6, dans laquelle :
les liens physiques (26) de la deuxième étape (52) comprennent au moins une parmi une liaison mécanique, une connexion électrique, une connexion électronique, une connexion de bus CAN, une connexion Ethernet et un couplage hydraulique.

8. Méthode selon les revendications 1 à 7, dans laquelle :
la deuxième étape (52) de fourniture de guidage et/ou d'informations de sécurité à un opérateur via le dispositif électronique sans fil portatif (30) concernant l'établissement de liens physiques (26) entre l'outil agricole (14) et le tracteur agricole (12) se fait grâce à l'utilisation d'une interaction audio et/ou vidéo à l'aide du dispositif électronique sans fil portatif (30).

9. Méthode selon les revendications 1 à 8, dans laquelle :
lors de la deuxième étape (52), le dispositif électronique sans fil portatif (30) et/ou le serveur de base de données (32) auquel le dispositif électronique sans fil portatif (30) est connecté sans fil, crée un profil de la combinaison (10) du tracteur agricole (12) et de l'outil (14) et met à jour des détails concernant le lien entre le tracteur agricole (12) et l'outil agricole (14) stockés sur le serveur de base de données (32).

10. Méthode selon la revendication 1, dans laquelle :
lors de la troisième étape (54), le dispositif électronique sans fil portatif (30), le serveur de base de données (32) qui communique via une connexion sans fil (42), au moins une unité de commande du tracteur (16) qui communique via une connexion sans fil dans le tracteur (18) et/ou une unité de commande de l'outil (20) qui communique via une connexion sans fil de l'outil (22), coopèrent afin de vérifier si des pilotes de logiciel et des informations de configuration (36) portant sur le contrôle et l'opération de l'outil agricole (14) sont les derniers pilotes de logiciel et/ou informations de configuration (36) disponibles pour ladite combinaison (10) du tracteur agricole (12) et de l'outil agricole (14) et afin de mettre à jour les pilotes de logiciel et/ou informations de configuration (36) et afin de configurer selon les besoins l'unité de commande du tracteur (16) et/ou l'unité de commande de l'outil (20).

11. Méthode selon la revendication 10, dans laquelle :
lors de la troisième étape (54), un feed-back est fourni au serveur de base de données (32) et au dispositif électronique sans fil portatif (30), mettant à jour de façon dynamique des informations concernant la configuration en cours.

12. Méthode selon les revendications 1 à 11, comprenant en outre :
une quatrième étape (56) de fourniture d'une liste de contrôle (44) à l'opérateur à travers du dispositif électronique sans fil portatif (30), la liste de contrôle (44) exige de l'opérateur de vérifier si le guidage et/ou l'information de sécurité fourni(e) lors de la deuxième étape (52) concernant l'établissement de liens physiques (26) entre l'outil agricole (14) et le tracteur agricole (12) a été respecté(e).

13. Méthode selon la revendication 12, dans laquelle :
la liste de contrôle (44) de la quatrième étape (56) exige en outre de l'opérateur de confirmer que la configuration automatique réalisée lors de la troisième étape (54) est cohérente avec la combinaison (10) réelle du tracteur agricole (12) et de l'outil agricole (14), et que tous les liens physiques (26) fonctionnent correctement, la liste de contrôle (44) comprenant en outre des instructions quant à la manière de déterminer si les liens physiques (26) fonctionnent effectivement comme il faut.

14. Méthode selon les revendications 1 à 13, comprenant en outre :
une cinquième étape (58) de fourniture d'informations opérationnelles (46) à l'opérateur qui utilise le dispositif électronique sans fil portatif (30) en communication avec le serveur de base de données (32) au moyen de la connexion sans fil (42), les informations opérationnelles (46) comprenant des instructions de fonctionnement, étape par étape, fournies à l'opérateur par des instructions écrites, visuelles ou audio.

15. Méthode selon la revendication 14, dans laquelle :
lors de la cinquième étape (58), on rassemble des informations enregistrées par l'opérateur à l'aide du dispositif électronique sans fil portatif (30) et on stocke les informations enregistrées par l'opérateur sur le serveur de base de données (32) et/ou retransmet des données opérationnelles au serveur de base de données (32).
